# EUROPEAN PATENT APPLICATION

(11) **EP 4 159 378 A1**
(43) Date of publication of application: **05.04.2023**
(21) Application number: 22187413.4
(22) Date of filing: 28.07.2022
(51) Int. Cl.: B25F 5/00

(54) **INTELLIGENT VOICE BROADCAST METHOD APPLIED TO ELECTRIC TOOL AND ELECTRIC TOOL**

(30) Priority: 23.08.2021 CN 202110967737
(71) Applicant: DongGuan Koham IndustriaI Co., Ltd., Dongguan City, Guangdong 523000 (CN)
(72) Inventor: Ma, Xianpeng, Dongguan City, 523000 (CN)
(74) Representative: Cleanthous, Marinos

(57) **Abstract**

The present disclosure relates to the technical field of electric tools, in particular to an intelligent voice broadcast method applied to an electric tool and an electric tool, including a working unit configured for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part. Corresponding voice files are loaded according to different working states of the electric tool, so that a user can intuitively determine a current working state of the electric tool by sounds. Thus, the working efficiency of the user can be improved, and the learning cost of the user is also greatly reduced.

## Description

### TECHNICAL FIELD

The present disclosure relates to the technical field of electric tools, in particular to an intelligent voice broadcast method applied to an electric tool and an electric tool.

### BACKGROUND

An electric tool is a tool with an additional power source, which can greatly improve the working efficiency during machining of an object of labor. A traditional electric tool mainly include a working unit, a power part that provides a power source for an action of the working unit, a driving module for controlling the power part to run, and a power supply part for supplying electric energy to each part of the electric tool.

With the gradual improvement of electric tools in recent years, a detection part and a prompt part are added to an electric tool. The detection part is used for detecting a state of the electric tool during working; and the prompt part is used for showing to a user the state of the electric tool during working. On the current market, it is relatively easy to prompt a state of an electric tool, mainly including prompting startup of the electric tool, prompting shutdown of the electric tool, and prompting a jam fault of the electric tool during working. Therefore, most electric tools only adopt a buzzer to prompt its state. Sounds produced by the buzzer are relatively simple, which are mainly used for making a prompt or sounding an alarm. According to different designs and uses, the buzzer can produce musical sound, whistle, buzzing sound, alarm sound, ringing sound and various other simple sounds. A buzzer has high electro-acoustic power conversion ratio within an extremely narrow frequency range, so that only "di~" and "di di~" can be simply produced, and a user needs to identify a current state of an electric tool according to a sound production frequency and a duration. However, if a traditional buzzer is used to prompt a working state of a perfect electric tool (such as a communication failure, battery mismatch, motor stalling, danger reminding, wireless pairing reminding, too long working time and overtemperature), only a professional can accurately know a current state of the electric tool by comparing pre-made documents according to a prompt of the buzzer. It is hard for a user to remember a state corresponding to each sound. Therefore, it is necessary to design an electric tool with a humanized voice reminding function.

### SUMMARY

In order to overcome the above deficiencies, the present disclosure aims to provide a technical solution capable of solving the above problems.

An intelligent voice broadcast method applied to an electric tool includes a working unit configured for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part; the voice broadcast method includes a state detection unit for detecting a current condition of each module; a voice broadcast unit for broadcasting the current condition of each module by voice; and a voice conversion unit for providing various voice files for the voice broadcast unit to adapt to the current condition of each module; the state detection unit is provided with a power supply detection module and a temperature detection module; the power supply detection module acquires power supply information when the power supply unit works; the temperature detection module acquires temperature information when the electric tool works; the control unit generates a corresponding voice command according to the driving information, the power supply information and the temperature information and sends the voice command to the voice conversion unit; the voice conversion unit acquires a corresponding voice file according to the voice command; and the voice broadcast unit broadcasts the corresponding voice file by voice.

Preferably, the power supply detection module is further provided with an electric quantity collection module which collects electric quantity information of the power supply unit; the control unit determines the electric quantity information; and when the electric quantity information reaches a preset value, the control unit generates a corresponding voice command and sends the voice command to the voice conversion unit.

Preferably, the power supply detection module is further provided with an overvoltage and undervoltage detection module which collects the power supply information of the power supply unit; the control unit determines the electric quantity information; and when there is low battery or battery mismatch, the control unit generates a corresponding voice command and sends the voice command to the voice conversion unit.

Preferably, the power supply detection module is further provided with a communication identification module; the power supply unit is provided with an anti-counterfeiting identification module; the communication identification module identifies encrypted information of the anti-counterfeiting identification module; and the control unit determines the encrypted information, generates a corresponding voice command and sends the voice command to the voice conversion unit.

Preferably, the temperature information acquired by the temperature detection module when the electric tool works includes high-temperature information and overtemperature information; when information received by the control unit is identified as the high-temperature information, the voice broadcast unit broadcasts a voice file corresponding to a current temperature value of the electric tool; and when information received by the control unit is identified as the overtemperature information, the control unit stops the running of the power unit, and the voice broadcast unit broadcasts a voice file corresponding to a fact that the current temperature of the electric tool exceeds a standard.

An electric tool with an intelligent voice broadcast function, based on the above-mentioned intelligent voice broadcast method applied to an electric tool, includes a main body which is provided with a working unit for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part; the main body is also provided with a state detection unit for acquiring a current condition of each module; a voice broadcast unit for broadcasting the current condition of each module by voice; and a voice conversion unit for providing various voice files for the voice broadcast unit to adapt to the current condition of each module; the state detection unit is provided with a power supply detection module and a temperature detection module; the working unit cooperates with the power unit by power; the power unit, the signal generation unit, the state detection unit and the voice conversion unit are electrically connected to the control unit respectively; the power supply detection module is electrically connected to the power supply unit; and the temperature detection module correspondingly cooperates with a heating component in the electric tool.

Preferably, the power supply detection module includes an electric quantity collection module, an overvoltage and undervoltage detection module and a communication identification module; the power supply unit is provided with an anti-counterfeiting identification module and a battery; the electric quantity collection module and the overvoltage and undervoltage detection module are electrically connected to the battery; and the communication identification module is electrically connected to the anti-counterfeiting identification module.

Preferably, the main body is provided with a power input interface, and the power supply unit is provided with a power output interface; the power input interface and the power output interface are matched with each other; the power supply unit is detachably connected to the electric tool by abutment between the power output interface and the power input interface.

Preferably, the control unit includes a chip U1 of XMC1302 and a peripheral circuit used for connecting all the units and modules; and the voice conversion unit adopts a chip of WT588F02B-8S.

Preferably, the working unit is further provided with electric clippers; the power unit is further provided with a motor; and the state detection unit is also provided with a counter electromotive force detection module which is electrically connected to the motor.

Preferably, the electric tool also includes a state display module and a power button; the state display module is arranged on the main body; the state display module is electrically connected to a circuit module; the power supply unit supplies electric energy to the electric tool through the power button; and the signal generation unit includes a power button.

An electric tool with a power supply detection module includes a main body which is provided with a working unit for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part; the main body is also provided with a power supply detection module for acquiring a current condition of the power supply unit; a voice broadcast unit for broadcasting the current condition of each module by voice; and a voice conversion unit for providing various voice files for the voice broadcast unit to adapt to the current condition of each module; the working unit cooperates with the power unit by power; the power unit, the signal generation unit, the power supply detection module and the voice conversion unit are electrically connected to the control unit respectively; and the power supply detection module is electrically connected to the power supply unit.

An electric tool with a temperature detection module includes a main body which is provided with a working unit for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part; the main body is also provided with a temperature detection module for acquiring a heating condition of a heating component in the electric tool; a voice broadcast unit for broadcasting the current condition of each module by voice; and a voice conversion unit for providing various voice files for the voice broadcast unit to adapt to the current condition of each module; the working unit cooperates with the power unit by power; and the power unit, the signal generation unit, the temperature detection module and the voice conversion unit are electrically connected to the control unit respectively.

Compared with the prior art, the present disclosure has the following beneficial effects.

Corresponding voice files are loaded according to different working states of an electric tool, so that a user can intuitively determine a current working state of the electric tool by sounds. Thus, the working efficiency of the user can be improved, and the learning cost of the user is also greatly reduced.

Information of different working states of an electric tool is acquired through the signal generation unit and the state detection unit, that is, driving information generated by user's operation performed on the electric tool and temperature information and power supply information of the electric tool that are detected by the state detection unit, so that in operating and working processes of the electric tool, each action or each state can be broadcast via the voice broadcast unit, and the operation on the electric tool is more humanized.

The additional aspects and advantages of the prevent disclosure will be provided in the following descriptions, part of which will become apparent from the following descriptions or be learned through the practice of the prevent disclosure.

### BRIEF DESCRIPTION OF THE DRAWINGS

To describe the embodiments of the present disclosure or the technical solutions in the existing art more clearly, drawings required to be used in the embodiments or the illustration of the existing art will be briefly introduced below. Obviously, the drawings in the illustration below are only some embodiments of the present disclosure. Those ordinarily skilled in the art also can acquire other drawings according to the provided drawings without doing creative work.
FIG. 1 is a structural exploded diagram of the present disclosure;
FIG. 2 is a circuit connection block diagram of the present disclosure;
FIG. 3 is an electric connection block diagram of a power supply detection module and a power supply unit in the present disclosure;
FIG. 4 is a schematic diagram of a circuit structure of a chip U1 in the present disclosure;
FIG. 5 is a schematic diagram of a circuit structure of a power switching circuit in the present disclosure;
FIG. 6 is a schematic diagram of a circuit structure of a power control circuit in the present disclosure;
FIG. 7 is a schematic diagram of a circuit structure of a voice conversion unit in the present disclosure;
FIG. 8 is a schematic diagram of a circuit structure of a power supply detection module in the present disclosure;
FIG. 9 is a schematic diagram of a circuit structure of a temperature detection module in the present disclosure; and
FIG. 10 is a schematic diagram of a circuit structure of a chip U1 in the present disclosure.

Reference signs and names in the drawings are as follows:
main body 10, working unit 11, power unit 12, signal generation unit 13, power supply unit 14, power input interface 15, power output interface 16, control unit 20, state detection unit 21, voice conversion unit 22, voice broadcast unit 23, state display module 24, power button 25, counter electromotive force detection module 26, anti-counterfeiting identification module 141, battery 142, power supply detection module 211, temperature detection module 212, electric quantity collection module 213, overvoltage and undervoltage detection module 214, and communication identification module 215.

### DETAILED DESCRIPTION OF THE EMBODIMENTS

The technical solutions in the embodiments of the present disclosure will be clearly and completely described below. Apparently, the described embodiments are only a part of the embodiments of the present disclosure, rather than all the embodiments. Based on the embodiments in the present disclosure, all other embodiments obtained by those of ordinary skill in the art without creative work shall fall within the protection scope of the present disclosure.

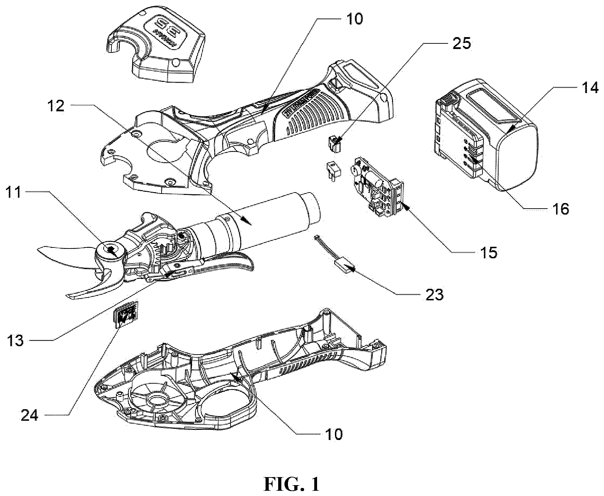

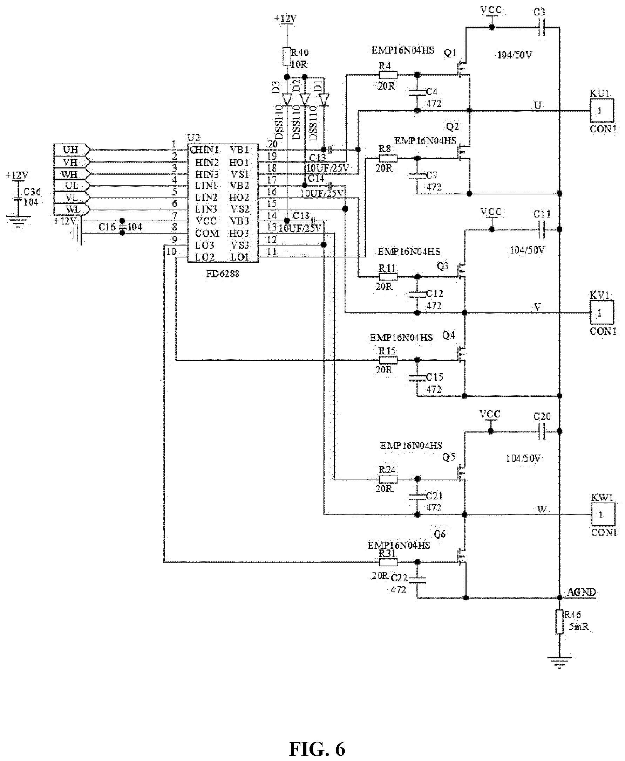

Referring to FIGS. 1-10, in the embodiments of the present disclosure, an intelligent voice broadcast method applied to an electric tool includes a working unit 11 configured for executing a work task; a power unit 12 for driving the working unit 11 to execute a work task by power; a signal generation unit 13 for generating driving information and enabling the working unit 11 to do, according to the driving information, a corresponding action; a power supply unit 14 for supplying electric energy to the electric tool; and a control unit 20 used as a center control part. The voice broadcast method includes a state detection unit 21 for detecting a current condition of each module; a voice broadcast unit 23 for broadcasting the current condition of each module by voice; and a voice conversion unit 22 for providing various voice files for the voice broadcast unit 23 to adapt to the current condition of each module. The state detection unit 21 is provided with a power supply detection module 211 and a temperature detection module 212; the power supply detection module 211 acquires power supply information when the power supply unit 14 works; the temperature detection module 212 acquires temperature information when the electric tool works; the control unit 20 generates a corresponding voice command according to the driving information, the power supply information and the temperature information and sends the voice command to the voice conversion unit 22; the voice conversion unit 22 acquires a corresponding voice file according to the voice command; and the voice broadcast unit 23 broadcasts the corresponding voice file by voice.

In the above technical solution, corresponding voice files are loaded according to different working states of an electric tool, so that a user can intuitively determine a current working state of the electric tool by sounds. Thus, the working efficiency of the user can be improved, and the learning cost of the user is also greatly reduced. Information of different working states of an electric tool is acquired through the signal generation unit 13 and the state detection unit 21, that is, driving information generated by user's operation performed on the electric tool and temperature information and power supply information of the electric tool that are detected by the state detection unit 21, so that in operating and working processes of the electric tool, each action or each state can be broadcast via the voice broadcast unit 23, and the operation on the electric tool is more humanized.

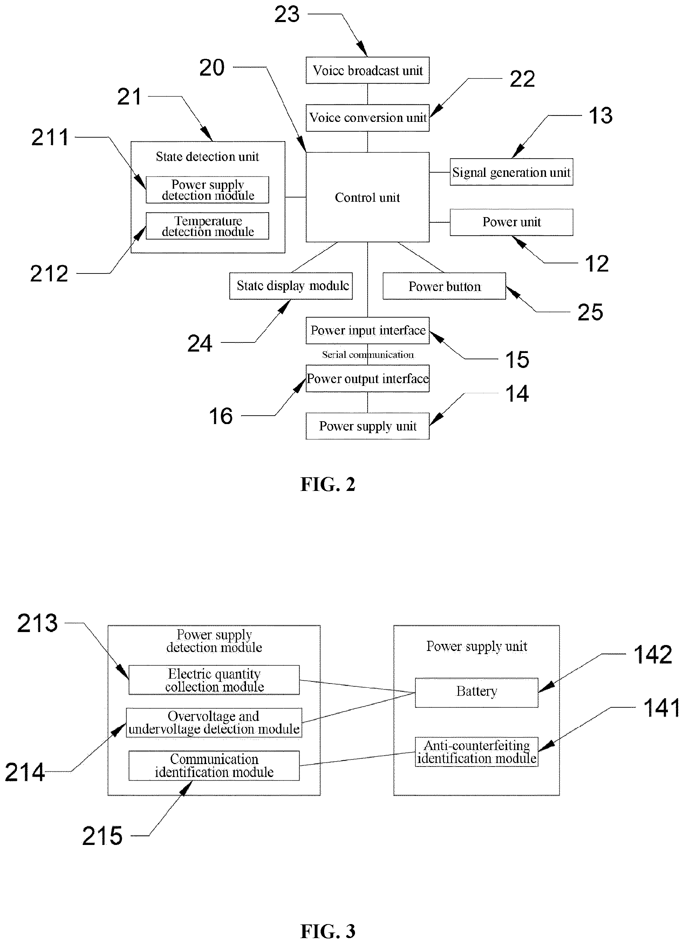

Further as shown in FIGS. 2-3, the power supply detection module 211 is further provided with an electric quantity collection module 213 which collects electric quantity information of the power supply unit 14; the control unit 20 determines the electric quantity information; and when the electric quantity information reaches a preset value, the control unit 20 generates a corresponding voice command and sends the voice command to the voice conversion unit 22. In this embodiment, an electric quantity broadcast value is preset for the control unit 20. When the electric quantity information reaches the preset value, an electric quantity of the electric tool in a current state is broadcast to remind a user to charge the electric tool in time.

Further as shown in FIGS. 2-3, the power supply detection module 211 is further provided with an overvoltage and undervoltage detection module 214 which collects the power supply information of the power supply unit 14; the control unit 20 determines the electric quantity information; and when there is low battery or battery mismatch, the control unit 20 generates a corresponding voice command and sends the voice command to the voice conversion unit 22.

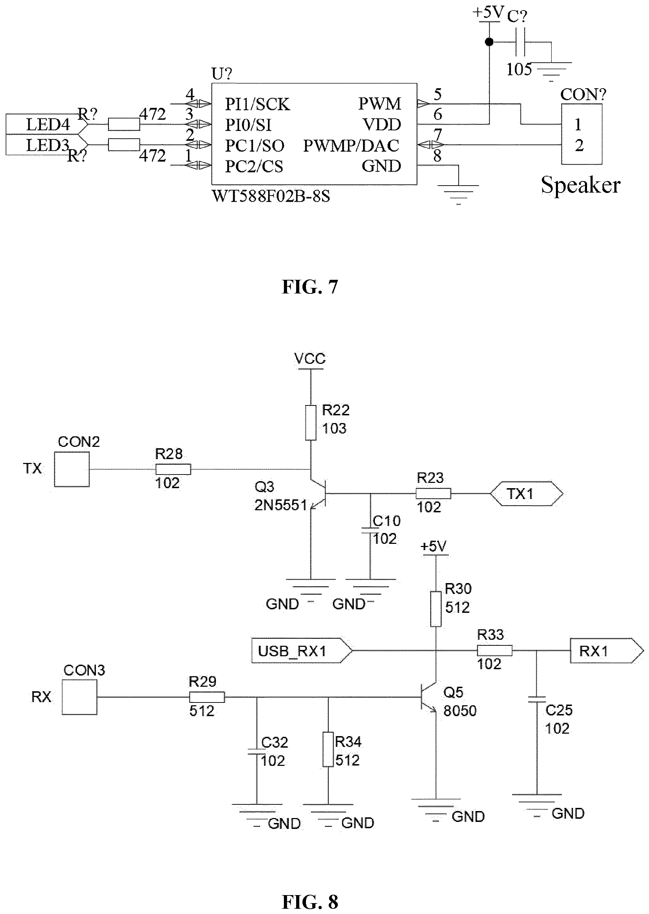

Further as shown in FIGS. 2-3, the power supply detection module 211 is further provided with a communication identification module 215; the power supply unit 14 is provided with an anti-counterfeiting identification module 141; the communication identification module 215 identifies encrypted information of the anti-counterfeiting identification module 141; and the control unit 20 determines the encrypted information, generates a corresponding voice command and sends the voice command to the voice conversion unit 22. In this embodiment, a battery anti-counterfeiting function is designed. Whether a battery in the power supply unit 14 is an original battery is identified via communication using a serial port, so as to prevent an irreversible damage to a system due to the fact that a user puts on an inferior battery. A communication protocol is encrypted using a method combining CRC8 check and parity check. As shown in FIG. 8, hardware adopts high-voltage communication, so that system communication can safely and stably run. A switching characteristic of a triode is adopted, that is, a triode works in a saturated region to achieve level conversion between a low voltage and a high voltage.

Further, the temperature information acquired by the temperature detection module 212 when the electric tool works includes high-temperature information and overtemperature information; when information received by the control unit 20 is identified as the high-temperature information, the voice broadcast unit 23 broadcasts a voice file corresponding to a current temperature value of the electric tool; and when information received by the control unit 20 is identified as the overtemperature information, the control unit 20 stops the running of the power unit 12, and the voice broadcast unit 23 broadcasts a voice file corresponding to a fact that the current temperature of the electric tool exceeds a standard.

Referring to FIGS. 1-10, in the embodiments of the present disclosure, an electric tool with an intelligent voice broadcast function, based on the above-mentioned intelligent voice broadcast method applied to an electric tool, includes a main body 10 which is provided with a working unit 11 for executing a work task; a power unit 12 for driving the working unit 11 to execute a work task by power; a signal generation unit 13 for generating driving information and enabling the working unit 11 to do, according to the driving information, a corresponding action; a power supply unit 14 for supplying electric energy to the electric tool; and a control unit 20 used as a center control part. The main body 10 is also provided with a state detection unit 21 for acquiring a current condition of each module; a voice broadcast unit 23 for broadcasting the current condition of each module by voice; and a voice conversion unit 22 for providing various voice files for the voice broadcast unit 23 to adapt to the current condition of each module; the state detection unit 21 is provided with a power supply detection module 211 and a temperature detection module 212; the working unit 11 cooperates with the power unit 12 by power; the power unit 12, the signal generation unit 13, the state detection unit 21 and the voice conversion unit 22 are electrically connected to the control unit 20 respectively; the power supply detection module 211 is electrically connected to the power supply unit 14; and the temperature detection module 212 correspondingly cooperates with a heating component in the electric tool. The heating component mainly includes a metal oxide semiconductor (MOS) transistor, a battery 142 and a chip in a circuit.

Further as shown in FIGS. 1-3, the power supply detection module 21 includes an electric quantity collection module 213, an overvoltage and undervoltage detection module 214 and a communication identification module 215; the power supply unit 14 is provided with an anti-counterfeiting identification module 141 and a battery 142; the electric quantity collection module 213 and the overvoltage and undervoltage detection module 214 are electrically connected to the battery 142; and the communication identification module 215 is electrically connected to the anti-counterfeiting identification module 141. The main body is provided with a power input interface 15, and the power supply unit 14 is provided with a power output interface 16; the power input interface 15 and the power output interface 16 are matched with each other; the power supply unit 14 is detachably connected to the electric tool by abutment between the power output interface 16 and the power input interface 15.

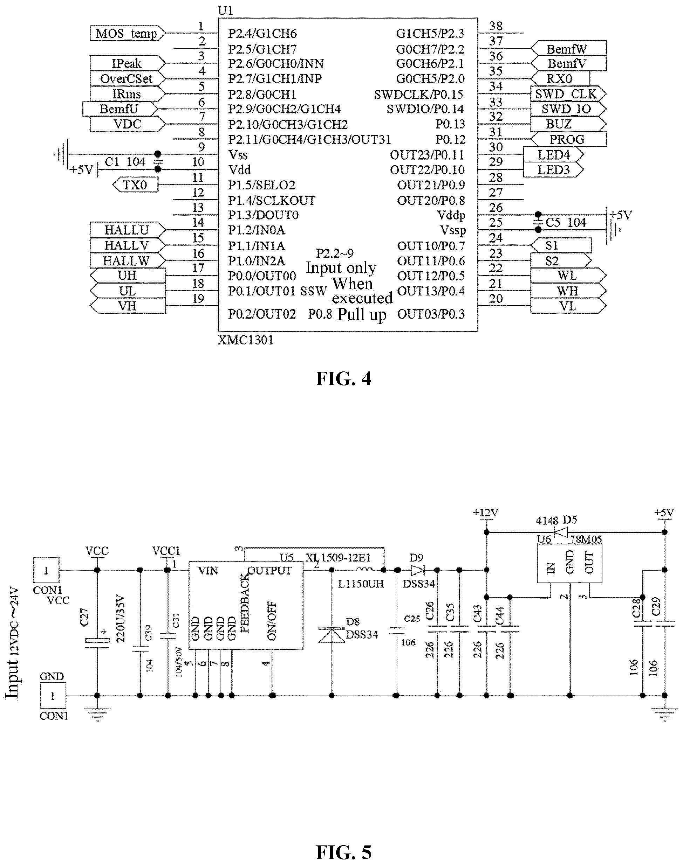

Further as shown in FIGS. 4-7, the control unit 20 includes a chip U1 of XMC1302 and a peripheral circuit used for connecting all the units and modules. The XMC1300 series belongs to the XMC1000 industrial micro controller family which is based on an ARMCortex-M0 processor kernel; an XMC1300 series device is optimally designed for motor control, power switching and light-emitting diode (LED) illumination applications. The increasing complexity and computing capacity requirements of embedded control applications require a microcontroller to have high central processing unit (CPU) performance, integrated peripheral functions and a fast development environment, which not only shortens the time to market, but also does not affect the cost-effectiveness; the peripheral circuit mainly includes: a power control circuit corresponding to the power unit 12 and a power switching circuit corresponding to the power supply unit 14; the voice conversion unit 22 adopts a chip of WT588F02B-8S; and WT588F02B-8S is a 16-bit digital signal processor (DSP) voice chip, a built-in crystal oscillator, a 16-pulse width modulation (PWM) decoding and a directly drivable 8R0.5W speaker. WT588F02B-8S's higher sound quality can support storage of 170 seconds of voice content. Different from a traditional one time programmable (OTP) chip, the WT588F02B-8S has a biggest breakthrough that users can independently replace internal voice content of the chip online through a supporting downloader; and the chip has a built-in hardware serial peripheral interface (SPI), universal asynchronous receiver/transmitter (UART), industrial Internet consortium (IIC), comparator and other resources.

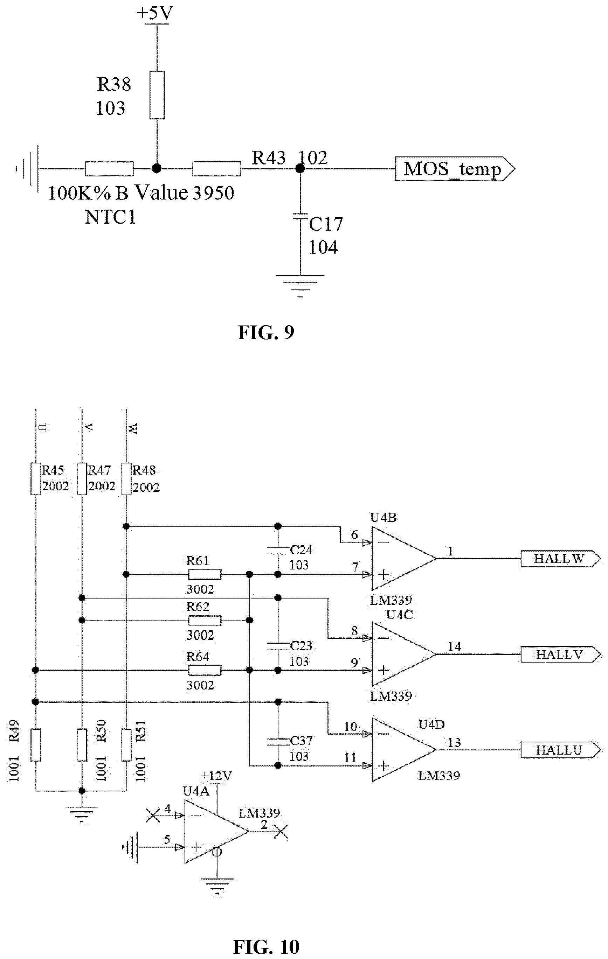

Further as shown in FIG. 1 and FIG. 10, the working unit 11 is further provided with electric clippers; the power unit 12 is further provided with a motor; and the state detection unit 21 is also provided with a counter electromotive force detection module 26 which is electrically connected to the motor. Electric clippers are used as an embodiment. In a shearing process, the counter electromotive force detection module 26 can detect whether the electric clippers have a jam fault and extremely high shear strength, or whether the shearing frequency is too large. The control unit 20 then generates a corresponding voice command to control the voice broadcast unit 23 to play back voice to remind a user.

Further as shown in FIGS. 1-2, the electric tool also includes a state display module 24 and a power button 25; the state display module 24 is arranged on the main body 10; the state display module 24 is electrically connected to a circuit module 20; the power supply unit 14 supplies electric energy to the electric tool through the power button 25; and the signal generation unit 13 includes a power button 25.

For those skilled in the art, it is apparent that the present disclosure is not limited to the details of the demonstrative embodiments mentioned above, and that the present disclosure can be realized in other specific forms without departing from the spirit or basic features of the present disclosure. Therefore, from any point of view, the embodiments should be regarded as exemplary and non-limiting. The scope of the present disclosure is defined by the appended claims rather than the above description. Therefore, all changes falling within the meanings and scope of equivalent elements of the claims are intended to be included in the present disclosure.

## Claims

1. An intelligent voice broadcast method applied to an electric tool, comprising a working unit configured for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part, wherein the voice broadcast method comprises a state detection unit for detecting a current condition of each module; a voice broadcast unit for broadcasting the current condition of each module by voice; and a voice conversion unit for providing various voice files for the voice broadcast unit to adapt to the current condition of each module, wherein the state detection unit is provided with a power supply detection module and a temperature detection module; the power supply detection module acquires power supply information when the power supply unit works; the temperature detection module acquires temperature information when the electric tool works; the control unit generates a corresponding voice command according to the driving information, the power supply information and the temperature information and sends the voice command to the voice conversion unit; the voice conversion unit acquires a corresponding voice file according to the voice command; and the voice broadcast unit broadcasts the corresponding voice file by voice.

2. The intelligent voice broadcast method applied to the electric tool according to claim 1, wherein the power supply detection module is further provided with an electric quantity collection module which collects electric quantity information of the power supply unit; the control unit determines the electric quantity information; and when the electric quantity information reaches a preset value, the control unit generates a corresponding voice command and sends the voice command to the voice conversion unit.

3. The intelligent voice broadcast method applied to the electric tool according to claim 2, wherein the power supply detection module is further provided with an overvoltage and undervoltage detection module which collects the power supply information of the power supply unit; the control unit determines the electric quantity information; and when there is low battery or battery mismatch, the control unit generates a corresponding voice command and sends the voice command to the voice conversion unit.

4. The intelligent voice broadcast method applied to the electric tool according to claim 3, wherein the power supply detection module is further provided with a communication identification module; the power supply unit is provided with an anti-counterfeiting identification module; the communication identification module identifies encrypted information of the anti-counterfeiting identification module; and the control unit determines the encrypted information, generates a corresponding voice command and sends the voice command to the voice conversion unit.

5. The intelligent voice broadcast method applied to the electric tool according to claim 1, wherein the temperature information acquired by the temperature detection module when the electric tool works comprises high-temperature information and overtemperature information; when information received by the control unit is identified as the high-temperature information, the voice broadcast unit broadcasts a voice file corresponding to a current temperature value of the electric tool; and when information received by the control unit is identified as the overtemperature information, the control unit stops the running of the power unit, and the voice broadcast unit broadcasts a voice file corresponding to a fact that the current temperature of the electric tool exceeds a standard.

6. An electric tool with an intelligent voice broadcast function, based on the above-mentioned intelligent voice broadcast method applied to an electric tool, comprising a main body which is provided with a working unit for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part, wherein the main body is also provided with a state detection unit for acquiring a current condition of each module; a voice broadcast unit for broadcasting the current condition of each module by voice; and a voice conversion unit for providing various voice files for the voice broadcast unit to adapt to the current condition of each module; the state detection unit is provided with a power supply detection module and a temperature detection module; the working unit cooperates with the power unit by power; the power unit, the signal generation unit, the state detection unit and the voice conversion unit are electrically connected to the control unit respectively; the power supply detection module is electrically connected to the power supply unit; and the temperature detection module correspondingly cooperates with a heating component in the electric tool.

7. The electric tool with the intelligent voice broadcast function according to claim 6, wherein the power supply detection module comprises an electric quantity collection module, an overvoltage and undervoltage detection module and a communication identification module; the power supply unit is provided with an anti-counterfeiting identification module and a battery; the electric quantity collection module and the overvoltage and undervoltage detection module are electrically connected to the battery; and the communication identification module is electrically connected to the anti-counterfeiting identification module.

8. The electric tool with the intelligent voice broadcast function according to claim 7, wherein the main body is provided with a power input interface, and the power supply unit is provided with a power output interface; the power input interface and the power output interface are matched with each other; the power supply unit is detachably connected to the electric tool by abutment between the power output interface and the power input interface.

9. The electric tool with the intelligent voice broadcast function according to claim 6, wherein the control unit comprises a chip U1 of XMC1302 and a peripheral circuit used for connecting all the units and modules; and the voice conversion unit adopts a chip of WT588F02B-8S.

10. The electric tool with the intelligent voice broadcast function according to claim 9, wherein the working unit is further provided with electric clippers; the power unit is further provided with a motor; and the state detection unit is also provided with a counter electromotive force detection module which is electrically connected to the motor.

11. The electric tool with the intelligent voice broadcast function according to claim 6, wherein the electric tool also comprises a state display module and a power button; the state display module is arranged on the main body; the state display module is electrically connected to a circuit module; the power supply unit supplies electric energy to the electric tool through the power button; and the signal generation unit comprises a power button.

12. An electric tool with a power supply detection module, the electric tool comprising a main body which is provided with a working unit for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part, wherein the main body is also provided with a power supply detection module for acquiring a current condition of the power supply unit; a voice broadcast unit for broadcasting the current condition of each module by voice; and a voice conversion unit for providing various voice files for the voice broadcast unit to adapt to the current condition of each module; the working unit cooperates with the power unit by power; the power unit, the signal generation unit, the power supply detection module and the voice conversion unit are electrically connected to the control unit respectively; and the power supply detection module is electrically connected to the power supply unit.

13. An electric tool with a temperature detection module, the electric tool comprising a main body which is provided with a working unit for executing a work task; a power unit for driving the working unit to execute a work task by power; a signal generation unit for generating driving information and enabling the working unit to do, according to the driving information, a corresponding action; a power supply unit for supplying electric energy to the electric tool; and a control unit used as a center control part, wherein the main body is also provided with a temperature detection module for acquiring a heating condition of a heating component in the electric tool; a voice broadcast unit for broadcasting the current condition of each module by voice; and a voice conversion unit for providing various voice files for the voice broadcast unit to adapt to the current condition of each module; the working unit cooperates with the power unit by power; and the power unit, the signal generation unit, the temperature detection module and the voice conversion unit are electrically connected to the control unit respectively.
